# EUROPÄISCHE PATENTSCHRIFT

(11) **EP 1 721 768 B1**
(45) Veröffentlichungstag und Bekanntmachung des Hinweises auf die Patenterteilung: **12.09.2007**
(21) Anmeldenummer: 06009355.6
(22) Anmeldetag: 05.05.2006
(51) Int. Cl.: B60J 5/06

(54) **Schiebetüre für ein Kraftfahrzeug**
Sliding door for a vehicle
Porte coulissante pour un véhicule

(30) Priorität: 09.05.2005 DE 102005021307; 22.07.2005 DE 102005034346
(43) Veröffentlichungstag der Anmeldung: 15.11.2006
(60) Teilanmeldung: 07004170.2
(73) Patentinhaber: DURA Automotive Body & Glass Systems GmbH, 58840 Plettenberg (DE)
(72) Erfinder: Heuel, Gerhard, 57462 Olpe (DE); Rottmann, Ralf, 57489 Drolshagen (DE)
(74) Vertreter: Zinnecker, Armin

(56) Entgegenhaltungen:
- US-A- 3 935 674
- US-B1- 6 183 039
- PATENT ABSTRACTS OF JAPAN Bd. 2003, Nr. 08, 6. August 2003 (2003-08-06) & JP 2003 120116 A (NISSAN MOTOR CO LTD), 23. April 2003 (2003-04-23)

## Beschreibung

Die Erfindung betrifft eine Schiebetüre für ein Fahrzeug, insbesondere für ein Kraftfahrzeug.

Schiebetüren für Kraftfahrzeuge sind bereits bekannt. Bei bekannten Lösungen weist die Fahrzeugkarosserie an ihrer Außenseite eine Führungsschiene auf, in der die Schiebetüre längsverschieblich geführt ist. Diese Führungsschienen sind empfindlich für Beschädigungen und Verschmutzungen. Sie sind ferner unter gestalterischen Gesichtspunkten nachteilig.

Aus der JP 2003 120116 A, der US-B1-6 183 039 und der US-A-3 935 674 sind Schiebetüren nach dem Oberbegriff des Anspruchs 1 bekannt.

Aufgabe der Erfindung ist es, eine verbesserte Schiebetüre für ein Fahrzeug vorzuschlagen.

Erfindungsgemäß wird diese Aufgabe durch die Merkmale des Anspruchs 1 gelöst. Die Schiebetüre weist an ihrer Innenseite eine Führungsschiene auf, die in einem Gleitschlitten längsverschieblich gelagert ist. Eine Führungsschiene in der Fahrzeugkarosserie ist damit nicht erforderlich.

Die Schiebetüre ist an dem dem Scharnierbügel abgewandten Ende an dem Fahrzeug arretierbar, und zwar in der Weise, daß an der Arretierungsstelle bei einer Verschwenkung des Scharnierbügels ein Längenausgleich und eine Drehbarkeit ermöglicht werden.

Vorteilhafte Weiterbildungen sind in den Unteransprüchen beschrieben.

Vorteilhaft ist es, wenn ein Motor zum Antrieb der Führungsschiene vorhanden ist. Dabei kann es sich um einen Elektromotor und/oder einen Getriebemotor handeln. Der Motor ist vorzugsweise an dem Gleitschlitten vorgesehen. Durch den Motor kann die Führungsschiene relativ zum Gleitschlitten angetrieben werden.

Vorzugsweise ist durch den Motor ein Zahnrad antreibbar. Das Zahnrad greift vorzugsweise in eine an der Schiebetüre vorgesehene Zahnstange ein. Nach einer weiteren vorteilhaften Weiterbildung greift das Zahnrad in ein weiteres Zahnrad ein, das in eine weitere Zahnstange eingreift. Das weitere Zahnrad hat vorzugsweise den gleichen Durchmesser und die gleiche Zähnezahl wie das durch den Motor antreibbare Zahnrad. Die weitere Zahnstange ist vorzugsweise beabstandet von und parallel zu der ersten Zahnstange.

Eine weitere vorteilhafte Weiterbildung ist dadurch gekennzeichnet, daß der Gleitschlitten schwenkbar gelagert ist.

Vorzugsweise ist der Gleitschlitten an einem Scharnierbügel gelagert. Vorteilhaft ist es, wenn der Gleitschlitten an dem Scharnierbügel schwenkbar gelagert ist.

Der Scharnierbügel ist vorzugsweise an dem Fahrzeug schwenkbar gelagert.

Vorteilhaft ist es, wenn ein Motor zum Antrieb des Scharnierbügels vorgesehen ist. Der Motor ist vorzugsweise an dem Fahrzeug bzw. Kraftfahrzeug vorgesehen. Es kann sich um einen Elektromotor und/oder um einen Getriebemotor handeln. Durch den Motor kann der Scharnierbügel verschwenkt werden.

Vorzugsweise ist durch den Motor ein Zahnrad antreibbar. Das Zahnrad greift vorzugsweise in ein an dem Schwenkarm vorgesehenes Zahnrad ein.

Dies ist vorzugsweise dadurch erreichbar, daß an dem Fahrzeug ein Scharnierbolzen für eine Scharnierkulisse an der Schiebetüre vorgesehen ist. Die Anordnung kann auch in umgekehrter Weise getroffen sein: Dann ist der Scharnierbolzen an der Schiebetüre vorgesehen, und die Scharnierkulisse ist an dem Fahrzeug vorgesehen. Vorzugsweise handelt es sich um eine offene Scharnierkulisse, in die der Scharnierbolzen eindringen kann und die der Scharnierbolzen verlassen kann. Besonders geeignet sind U-förmige Scharnierkulissen. Der Scharnierbolzen und die Scharnierkulisse sind vorzugsweise derart angeordnet und aufeinander abgestimmt, daß sie die Schiebetüre in die Schließstellung führen.

An der Scharnierkulisse ist vorzugsweise ein Schalter, insbesondere ein Mikroschalter, vorgesehen. Der Schalter befindet sich vorzugsweise in der Nähe des Endes der Scharnierkulisse, also in der Nähe derjenigen Stelle, in der der Scharnierbolzen die Scharnierkulisse verläßt bzw. in die Scharnierkulisse eintritt. Durch den Schalter kann der Punkt, an dem eine Längsbewegung der Schiebetüre beginnen soll, erfaßt werden.

Eine weitere vorteilhafte Weiterbildung ist dadurch gekennzeichnet, daß an dem Scharnierbügel ein Umlenkarm mit einem Führungsstift vorgesehen ist, der in einer an der Schiebetüre vorgesehenen Umlenkführung geführt ist.

Vorzugsweise zweigt von der Umlenkführung eine Schloßführung ab.

Die Abzweigstelle der Schloßführung von der Umlenkführung ist vorzugsweise durch eine Schloßklinke schließbar. Vorteilhaft ist es, wenn die Schloßklinke schwenkbar gelagert ist. Vorzugsweise ist die Schloßklinke ein Bestandteil der Schloßführung.

In der Schloßführung kann eine Sperrnase für den Führungsstift vorgesehen sein.

Die Schloßklinke ist vorzugsweise federbelastet. Vorteilhaft ist es, wenn die Schloßklinke verriegelbar ist, vorzugsweise durch einen Verriegelungsbolzen.

Die Erfindung betrifft ferner ein Fahrzeug, insbesondere ein Kraftfahrzeug, das durch eine erfindungsgemäße Schiebetüre gekennzeichnet ist.

Ein Ausführungsbeispiel der Erfindung wird nachstehend anhand der beigefügten Zeichnung im einzelnen erläutert. In der Zeichnung zeigt
- Fig. 1: einen Teil einer Karosserie eines Kraftfahrzeugs mit einer teilweise geöffneten Schiebetüre in einer Seitenansicht,
- Fig. 2: die Karosserie gemäß Fig. 1 in einer Ansicht von oben,
- Fig. 3: die Schiebetüre gemäß Fig. 1 und 2 im geöffneten Zustand in einer Seitenansicht,
- Fig. 4: die Schiebetüre gemäß Fig. 3 in einer Ansicht von oben,
- Fig. 5: den Scharnierbügel und die diesem zugeordneten Bauteile in einer perspektivischen Ansicht,
- Fig. 6: die Bauteile gemäß Fig. 5, allerdings ohne einige Karosseriebauteile,
- Fig. 7: den Gleitschlitten und die ihm zugeordneten Bauteile in einer perspektivischen Ansicht,
- Fig. 8: die Bauteile gemäß Fig. 7, allerdings ohne einige Teile des Gleitschlittens,
- Fig. 9: den Scharnierarm und die Umlenkführung in einer Ansicht von oben bei geschlossener Schiebetür,
- Fig. 10: eine der Fig. 9 entsprechende, perspektivische Darstellung,
- Fig. 11: den Scharnierarm und die Umlenkführung in einer Ansicht von oben bei angestellter Schiebetüre,
- Fig. 12: den Umlenkarm und die Umlenkführung in einer perspektivischen Darstellung bei angestellter Schiebetüre,
- Fig. 13: eine der Fig. 12 entsprechende Darstellung bei einer Zwischenstellung der Schiebetüre,
- Fig. 14: eine den Fig. 12 und 13 entsprechende Darstellung bei einer weiter vorangeschrittenen Zwischenstellung der Schiebetüre,
- Fig. 15: eine den Fig. 12 bis 14 entsprechende Darstellung bei geöffneter Schiebetüre,
- Fig. 16: den Scharnierbolzen und die Scharnierkulisse in einer Ansicht von oben bei geschlossener Schiebetüre,
- Fig. 17: eine der Fig. 16 entsprechende Darstellung bei angestellter Schiebetüre,
- Fig. 18: eine den Fig. 16 und 17 entsprechende Darstellung bei einer Zwischenstellung der Schiebetüre und
- Fig. 19: eine den Fig. 16 bis 18 entsprechende Darstellung bei einer weiter vorangeschrittenen Zwischenstellung der Schiebetüre.

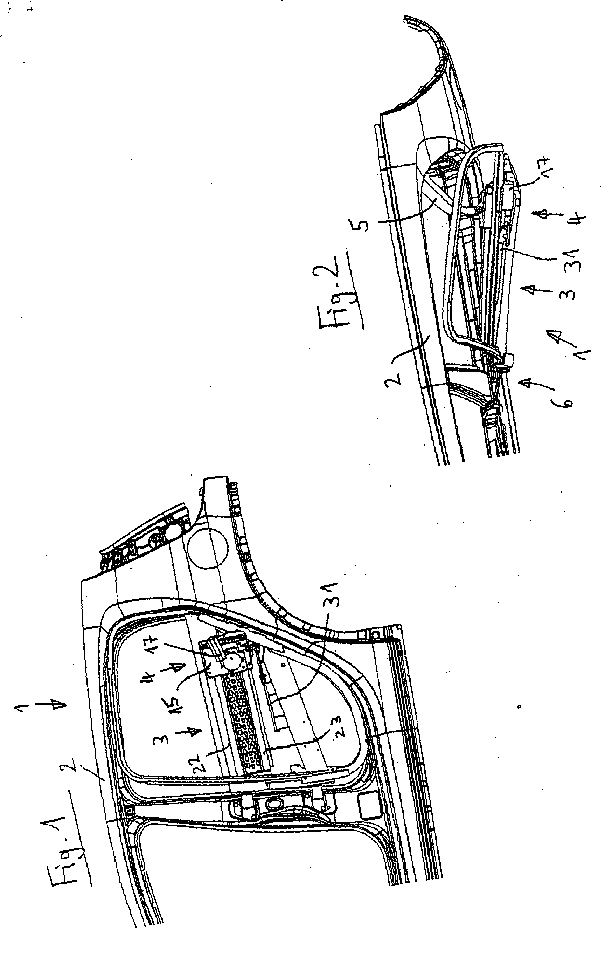

In Fig. 1 und 2 ist eine Schiebetüre 1 gezeigt, die gegenüber der Karosserie 2 eines Kraftfahrzeugs teilweise geöffnet ist. Die Schiebetüre 1 weist an ihrer Innenseite eine Führungsschiene 3 auf, die in einem Gleitschlitten 4 längsverschieblich gelagert ist.

An der Karosserie 2 ist ein Scharnierbügel 5 schwenkbar gelagert. Am anderen Ende des Scharnierbügels 5 ist der Gleitschlitten 4 schwenkbar gelagert.

Beim Öffnen der Schiebetüre 1 wird diese zunächst aus der geschlossenen Stellung (in der Zeichnung nicht dargestellt) in die teilweise geöffnete Stellung, die in Fig. 1 und 2 gezeigt ist, verschwenkt. Dies geschieht durch eine Verschwenkung des Scharnierbügels 5. Um diese Schwenkbewegung zu ermöglichen, ist an dem dem Scharnierbügel 5 gegenüberliegenden Ende der Schiebetüre 1, im dargestellten Ausführungsbeispiel also am vorderen Ende der Schiebetüre 1, eine U-förmige Scharnierkulisse 6 vorgesehen. Die U-förmige Scharnierkulisse 6 verläuft im wesentlichen parallel zur Fahrzeug-Längsrichtung. Sie ist an ihrem dem Scharnierbügel 5 abgewandten, im Ausführungsbeispiel also vorderen Ende offen. In die U-förmige Scharnierkulisse 6 greift ein Scharnierbolzen 7 ein, der im wesentlichen vertikal nach oben ragt. Durch den Scharnierbolzen 7 und die Scharnierkulisse 6 ist die Schiebetüre 7 an dem dem Scharnierbügel 5 abgewandten Ende an dem Fahrzeug arretierbar.

Wenn die Schiebetüre 1 vollständig geschlossen ist, liegt der Scharnierbolzen 7 innerhalb der U-förmigen Scharnierkulisse 6, und zwar im Abstand von deren Ende. Während der durch eine Verschwenkung des Scharnierbügels 5 erzeugten Öffnungsbewegung führt die Schiebetüre 1 eine Verschwenkung um den Scharnierbolzen 7 aus. Dabei gleitet die U-förmige Scharnierkulisse 6 relativ zum Scharnierbolzen 7 von diesem weg. In der in Fig. 1 und 2 gezeigten Stellung der Schiebetüre 1, in der die Schiebetüre 1 angestellt ist, befindet sich der Scharnierbolzen 7 am offenen Ende der U-förmigen Scharnierkulisse 6.

Bei der Schließbewegung wird die Schiebetüre 1 derart positioniert, daß das offene Ende der U-förmigen Scharnierkulisse 6 den Scharnierbolzen 7 aufnimmt. Hierdurch wird die Schließbewegung der Schiebetüre 1 bis zur vollständig geschlossenen Stellung ermöglicht.

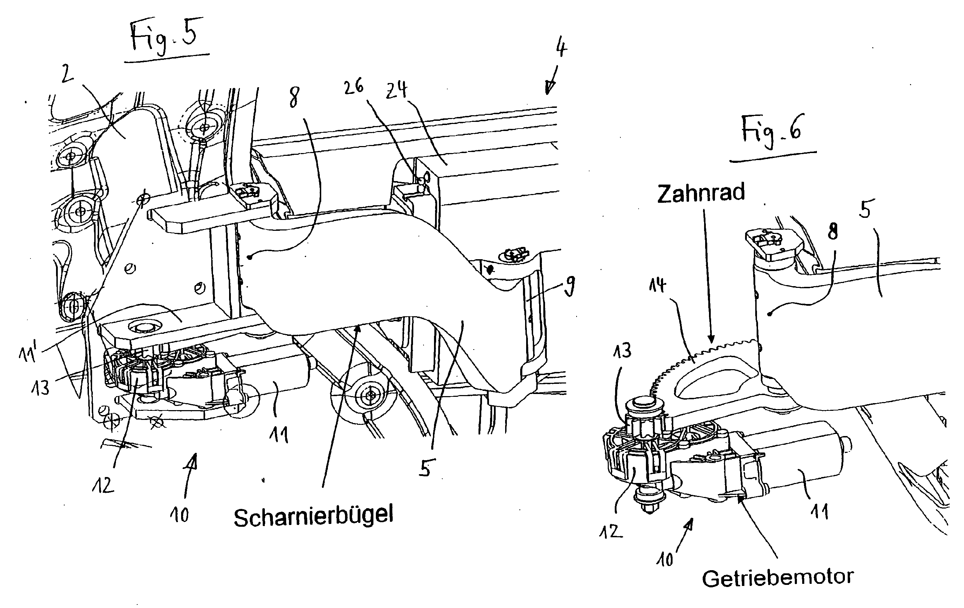

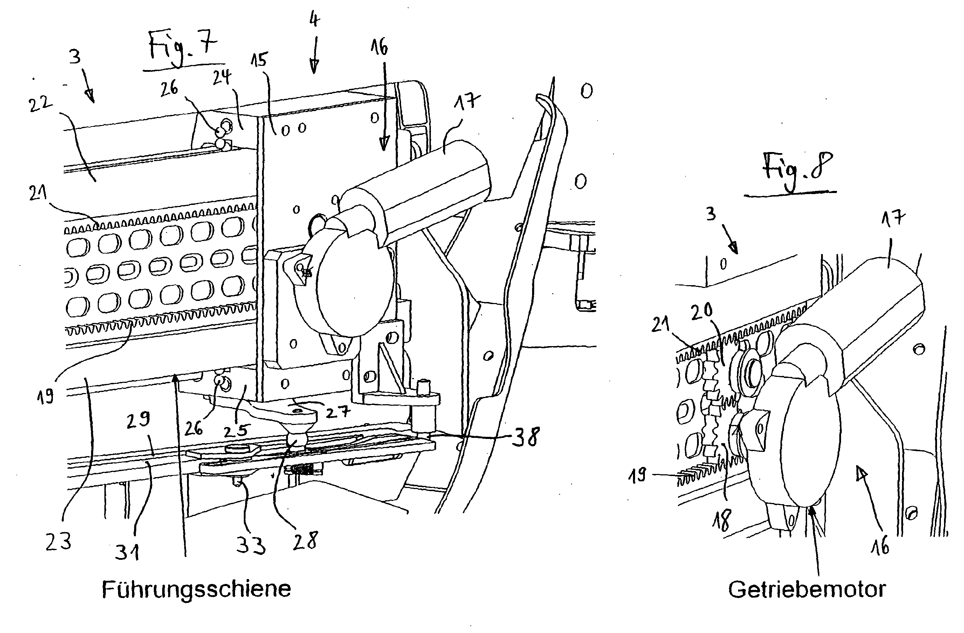

In Fig. 5 und 6 sind der Scharnierbügel 5 und die ihn umgebenden Teile vergrößert dargestellt. Der Scharnierbügel 5 ist an einem Teil der Karosserie 2 um eine im wesentlich vertikal verlaufende Achse 8 schwenkbar gelagert. Er ist an seinem anderen Ende um eine ebenfalls im wesentlichen vertikal verlaufende Achse 9 an dem Gleitschlitten 4 schwenkbar gelagert. Der Scharnierbügel 5 umfaßt ein Mitteilteil, das in der Ansicht von oben (Fig. 2 und 4) im wesentlichen gerade bzw. eben verläuft, das allerdings, wie insbesondere aus Fig. 5 ersichtlich, in der Richtung von der Karosserie 2 zum Gleitschlitten 4 schräg nach unten verläuft. Von dem Mittelteil des Scharnierbügels 5 knicken zwei Endteile, an deren Enden sich die Achsen 8, 9 befinden, in der Ansicht von oben (Fig. 2 und 4) ab, wobei das der Achse 8 zugewandte Ende um einen Winkel von etwa 90° abknickt und das der Achse 9 zugewandte Ende um einen Winkel von etwa 45° abknickt, so daß die Endteile in einem Winkel von etwa 135° zueinander stehen.

Zum Schwenkantrieb des Scharnierbügels 5 dient ein Getriebemotor 10, der an einem Winkelblech 11' an der C-Säule der Karosserie 2 befestigt ist. Der Getriebemotor 10 umfaßt einen Elektromotor 11, der ein Getriebe 12 antreibt, dessen vertikal verlaufende Ausgangswelle ein Zahnrad 13 trägt, das durch den Getriebemotor 10 antreibbar ist.

In Fig. 6 ist gegenüber der Darstellung in Fig. 5 das Winkelblech 11' weggelassen. Wie aus Fig. 6 ersichtlich, greift das Zahnrad 13 in ein Zahnrad 14 ein, das an dem Schwenkarm 5 vorgesehen ist. Das Zahnrad 14 ist um die Achse 8 schwenkbar gelagert. Es ist drehfest mit dem Schwenkarm 5 verbunden. Da der Schwenkarm 5 nur eine Drehung um etwa 90° ausführen muß, erstreckt sich auch das Zahnrad 14 nur über einen Winkelbereich von im wesentlichen 90°.

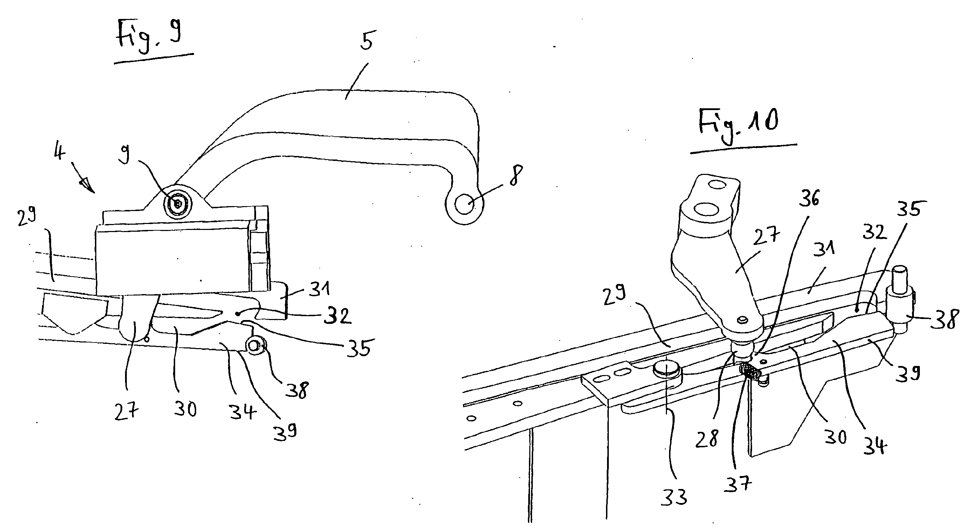

Wie aus Fig. 7 ersichtlich, ist an einer im wesentlichen vertikal verlaufenden Verbindungsplatte 15 des Gleitschlittens 4 ein Getriebemotor 16 befestigt, der zum Antrieb der Führungsschiene 3 dient. Der Getriebemotor 16 umfaßt einen Elektromotor 17, dessen im wesentlichen horizontal und parallel zur Führungsschiene 3 verlaufende Ausgangswelle ein Schneckenrad trägt, das ein Zahnrad antreibt, dessen Drehachse im wesentlichen horizontal und quer zur Führungsschiene 3 verläuft.

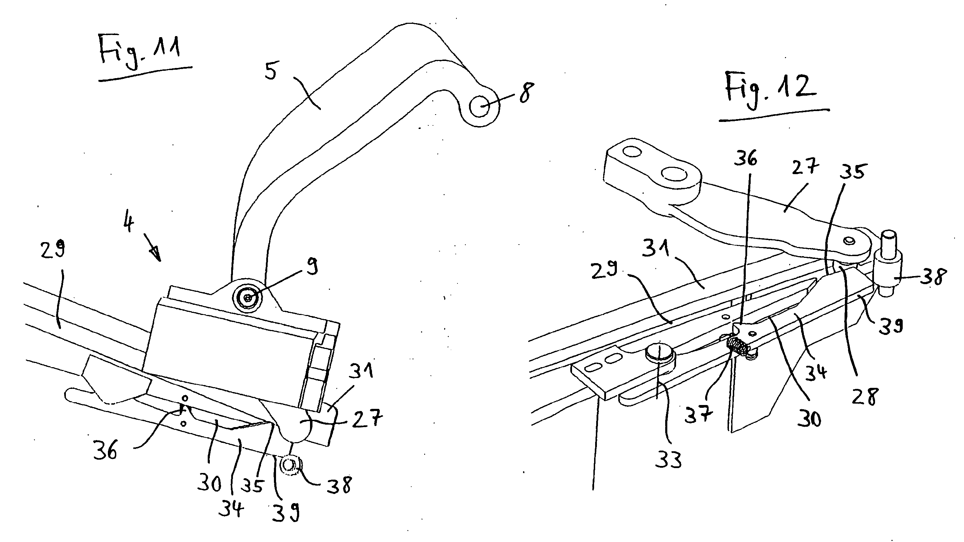

Dieses Zahnrad ist mit einem Zahnrad 18 verbunden, das in Fig. 8 zu sehen ist, da dort die Verbindungsplatte 15 des Gleitschlittens 4 weggelassen wurde. Das Zahnrad 18 greift in eine Zahnstange 19 ein, die an der Schiebetüre 1 vorgesehen ist. Die Zahnstange 19 verläuft parallel zu der Führungsschiene 3.

Das von dem Getriebemotor 16 angetriebene Zahnrad 18 greift ferner in ein weiteres Zahnrad 20 ein, das seinerseits in eine weitere Zahnstange 21 eingreift. Das angetriebene Zahnrad 20 hat denselben Durchmesser und dieselbe Zähnezahl wie das antreibende Zahnrad 18. Es ist an dem Gleitschlitten 4 um eine Achse drehbar gelagert, die zur Achse des antreibenden Zahnrads 18 parallel und von dieser beabstandet ist. Die weitere Zahnstange 21 verläuft parallel zu und im Abstand von der ersten Zahnstange 19. Die von dem Getriebemotor 16 in das antreibende Zahnrad 18 eingeleitete Drehbewegung versetzt das angetriebene Zahnrad 20 in eine gegenläufige Drehbewegung. Die gegenläufigen Drehungen der Zahnräder 18, 20 bewirken durch die Abstützung an den Zahnstangen 19, 21 eine lineare Bewegung der Führungsschiene 3 gegenüber dem Gleitschlitten 4.

Wie aus Fig. 7 ersichtlich, umfaßt die Führungsschiene 3 eine obere Führungsleiste 22 und eine untere Führungsleiste 23, deren äußere Enden von Führungsblöcken 24, 25 des Gleitschlittens 4 übergriffen werden. Die Gleitführung der Führungsleisten 22, 23 in den Führungsblöcken 24, 25 erfolgt durch Wälzlager 26.

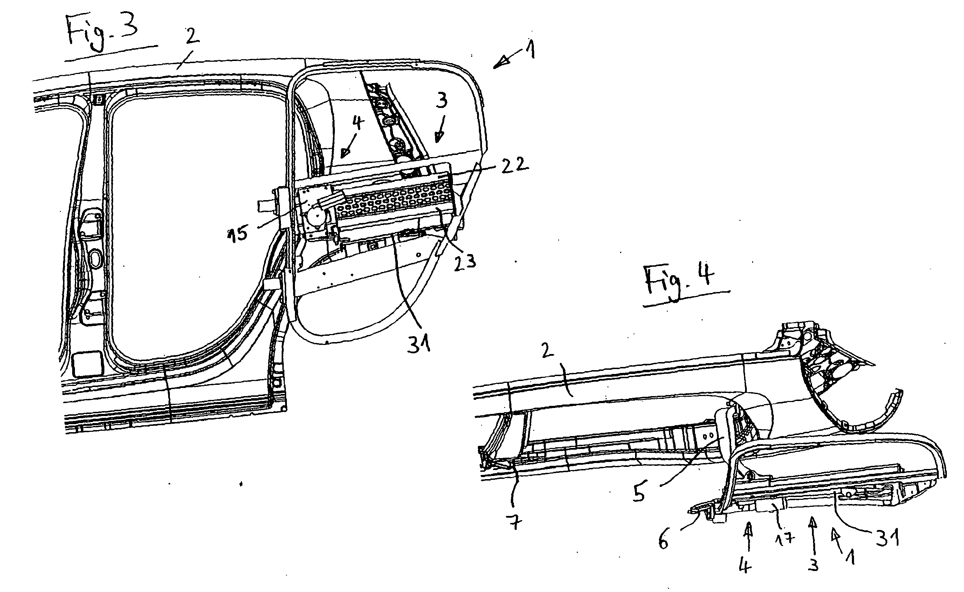

Durch die Erfindung wird ein elektromechanisches Antriebssystem für eine Schiebetüre eines Fahrzeugs, insbesondere eines Kraftfahrzeugs, geschaffen, die zwei Antriebseinheiten umfassen kann, die jeweils unterschiedliche Funktionen übernehmen. Eine erste Antriebseinheit wird von dem Getriebemotor 10 und den diesem zugeordneten Bauteilen realisiert. Diese Antriebseinheit übernimmt die erste Öffnungsbewegung der Schiebetüre 1, also das "Anstellen" der Schiebetüre 1, wie beispielsweise in Fig. 1 und 2 gezeigt. Eine zweite Antriebseinheit wird von dem Getriebemotor 16 und den ihm zugeordneten Bauteilen gebildet. Diese Antriebseinheit übernimmt die "Linearbewegung" der Schiebetüre 2 bis zur vollständig geöffneten Stellung, die in Fig. 3 und 4 gezeigt ist, und wieder zurück. Die erste Antriebseinheit und die zweite Antriebseinheit können elektromechanisch derart miteinander verbunden werden, daß sich hieraus eine Öffnungsbewegung und die entgegengesetzte Schließbewegung ergibt.

In Fig. 9 bis 19 ist der Bewegungsablauf beim Öffnen und Schließen der Schiebetüre 1 dargestellt. An dem Scharnierbügel 5 ist ein Umlenkarm 27 vorgesehen, der an seinem Ende einen Führungsstift 28 aufweist. Der Umlenkarm 27 bildet eine Verlängerung des der Achse 9 zugewandten Endteils des Scharnierbügels 5.

Der Führungsstift 28 weist eine Kugelkalotte auf, die in einer Umlenkführung 29 und in einer Schloßführung 30 geführt wird. Die Umlenkführung 29 ist einem Führungsblech 31 vorgesehen, das mit der Schiebetüre 1 verbunden ist. Sie erstreckt sich im wesentlichen in Fahrzeug-Längsrichtung.

Die Schloßführung 30 zweigt von der Umlenkführung 29 ab. Die Abzweigstelle 32 befindet sich an dem hinteren Ende der Umlenkführung 29. Die Schloßführung 30 verläuft in einem spitzen Winkel zur Umlenkführung 29.

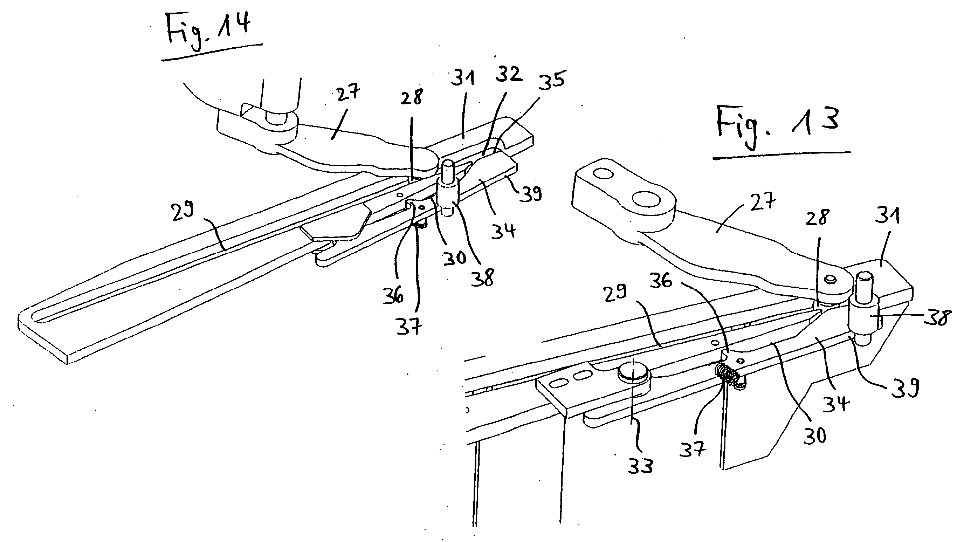

Am vorderen Ende der Schloßführung 30 ist eine vertikale Schwenkachse 33 vorgesehen, die von einem Bolzen gebildet werden kann und um die eine Schloßklinke 34 schwenkbar gelagert ist. Durch die Schloßklinke 34 ist die Abzweigstelle 32 der Schloßführung 30 von der Umlenkführung 29 schließbar. Hierzu weist die Schloßklinke 34 an ihrem der Schwenkachse 33 abgewandten Ende einen der Abzweigstelle 32 zugewandten Schließabschnitt 35 auf. Wenn sich die Schloßklinke in ihrer inneren Endstellung befindet, in der sie um die Schwenkachse 33 entgegen dem Uhrzeigersinn verschwenkt ist und die in Fig. 11 bis 15 gezeigt ist, ist die Abzweigstelle 32 geschlossen, so daß die Schloßführung 30 für den Führungsstift 28 nicht zugänglich ist. Wenn sich die Schloßklinke 34 in ihrer äußeren Endstellung befindet, in der sie um die Schwenkachse 33 im Uhrzeigersinn verschwenkt ist und die in Fig. 9 und 10 gezeigt ist, ist die Abzweigstelle 32 geöffnet, so daß die Schloßführung 30 für den Führungsstift 28 zugänglich ist.

Die Schloßklinke 34 bildet einen Bestandteil der Schloßführung 30. Wie aus Fig. 9 bis 15 ersichtlich, bildet die Innenseite der Schloßklinke 34 die Außenseite der Schloßführung 30. Die Innenseite der Schloßführung 30 wird von einer Außenseite des Führungsblechs 31 gebildet.

In der Schloßführung 30 ist eine Sperrnase 36 für den Führungsstift 28 vorgesehen.
Die Sperrnase 36 befindet sich etwa in der Mitte der Schloßführung 30. Sie ist an der Schloßklinke 34 vorgesehen. Ihre der Schwenkachse 33 zugewandte Flanke bildet einen Winkel von im wesentlichen 90° mit der Schloßführung 30. Ihre der Schwenkachse 33 abgewandte Flanke bildet einen Winkel von etwa 45° mit der Schloßführung 30.

Die Schloßklinke 34 ist durch eine Rückholfeder 37 vorbelastet, die als Zugfeder ausgestaltet ist und die zum einen an dem Führungsblech 31 und zum anderen an der Schloßklinke 34 befestigt ist, und zwar unterhalb dieser Bauteile. Durch die Rückholfeder 37 wird die Schloßklinke 34 in einer Richtung entgegen dem Uhrzeigersinn um die Schwenkachse 33 vorbelastet, also in derjenigen Richtung, in der die Schloßklinke 34 die Abzweigstelle 32 schließt.

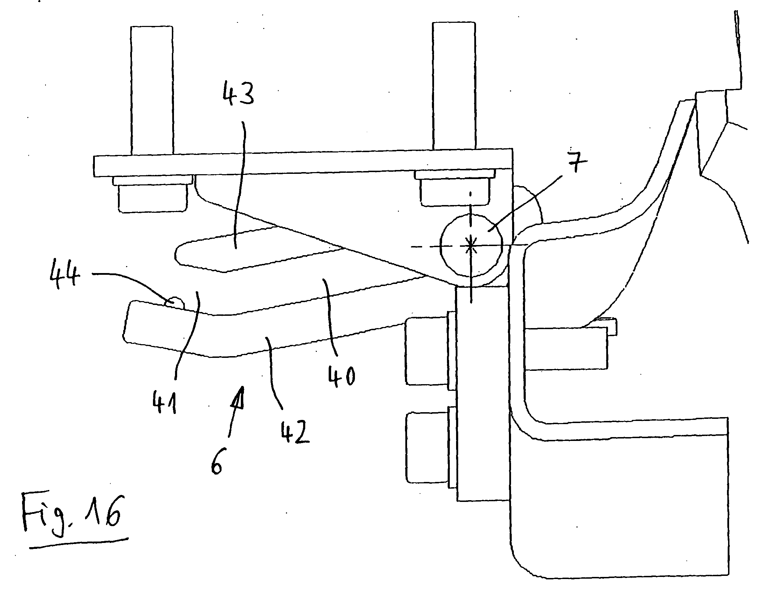

Die Schloßklinke 34 ist verriegelbar. Hierzu ist an dem Gleitschlitten 4 ein Verriegelungsbolzen 38 vorgesehen, der sich an dem dem Schließabschnitt 35 gegenüberliegenden, äußeren Abschnitt 39 der Schloßklinke 34 befindet, wenn die Schiebetüre eine Zwischenstellung einnimmt, wie in Fig. 13 und 14 gezeigt. In dieser Stellung wird durch den Verriegelungsbolzen 38 eine Verschwenkung der Schloßklinke 34 um die Schwenkachse 33 im Uhrzeigersinn, also in einer Richtung zur Öffnung der Abzweigstelle 32, verhindert, so daß die Abzweigstelle 32 geschlossen bleibt. Wenn die Schiebetüre 1 geschlossen oder angestellt ist, wie in Fig. 9 bis 12 gezeigt, befindet sich der Verriegelungsbolzen 38 nicht an dem dem Schließabschnitt 35 gegenüberliegenden, äußeren Abschnitt 39 der Schloßklinke 34, so daß die Schloßklinke 34 um die Schwenkachse 33 im Uhrzeigersinn verschwenkt werden kann und damit die Abzweigstelle 32 geöffnet werden kann.

Wenn die Schiebetüre 1 geschlossen ist, nimmt der Umlenkarm 27 die in Fig. 9 gezeigte Stellung ein, in der sein Führungsstift 28 an der der Schwenkachse 33 zugewandten Flanke der Sperrnase 36 anliegt. Da diese Flanke in einem Winkel von etwa 90° zur Schloßführung 30 verläuft, besteht eine Selbsthemmung, so daß die Schiebetüre 1 in dieser Stellung arretiert ist.

Zum Öffnen der Schiebetüre 1 wird die Schloßklinke 34 um die Schwenkachse 33 im Uhrzeigersinn verschwenkt, bis sie die in Fig. 10 gezeigte Stellung einnimmt. Diese Verschwenkung kann von Hand erfolgen, beispielsweise durch die Betätigung eines Öffnungshebels oder Öffnungsgriffs. Sie kann allerdings auch mit Motorkraft erfolgen, nämlich durch ein Relais, einen Elektromotor, einen Magnetschalter oder einen anderen Aktuator (in der Zeichnung nicht dargestellt). Wenn sich die Schloßklinke 34 in der in Fig. 10 gezeigten Stellung befindet, kann der Scharnierbügel 5 verschwenkt werden. Hierdurch gleitet der Führungsstift 28 an der Sperrnase 36 vorbei in der Schloßführung 30 weiter nach hinten. Der Verriegelungsbolzen 38 befindet sich weiterhin nicht auf der dem Schließabschnitt 35 gegenüberliegenden Abschnitt 39 der Schloßklinke 34, so daß der Führungsstift 28 den weiteren Weg in der Schloßführung 30 nach hinten durchlaufen kann.

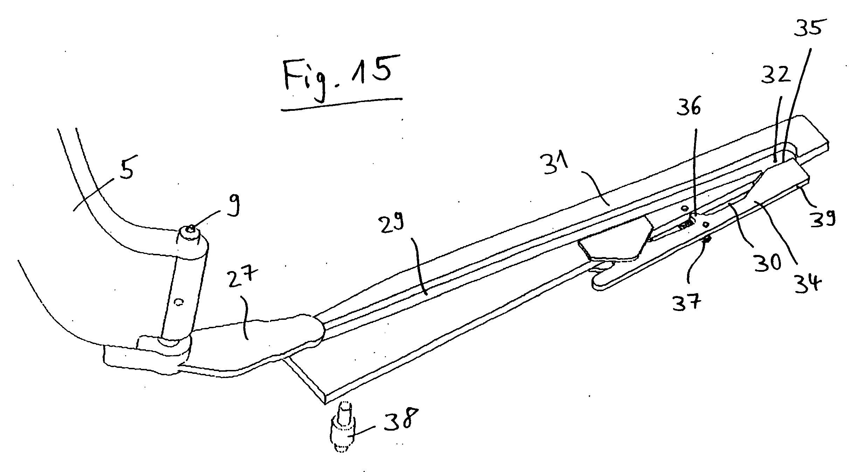

Auf diesem Weg durchläuft der Führungsstift 28 die Abzweigstelle 32. Er gelangt zum hinteren Ende der Umlenkführung 29, wie in Fig. 11 und 12 gezeigt. Der Scharnierbügel 5 ist jetzt so weit verschwenkt worden, daß die Schiebetüre 1 angestellt ist, wie in Fig. 2 gezeigt. In dieser Stellung ist die Abzweigstelle 32 geschlossen, da die Rückholfeder 37 die Schloßklinke 34 um die Schwenkachse 33 entgegen dem Uhrzeigersinn verschwenkt hat.

Anschließend wird die Führungsschiene 3 um ein kurzes Stück relativ zum Gleitschlitten 4 angetrieben. Hierdurch gelangt der Verriegelungsbolzen 38 an den dem Schloßabschnitt 35 gegenüberliegenden äußeren Abschnitt 39 der Schloßklinke 34, so daß die Schloßklinke 34 in ihrer die Abzweigstelle 32 schließenden Stellung verriegelt wird, wie in Fig. 13 gezeigt. Der Verriegelungsbolzen wird jetzt in der Umlenkführung 29 geführt.

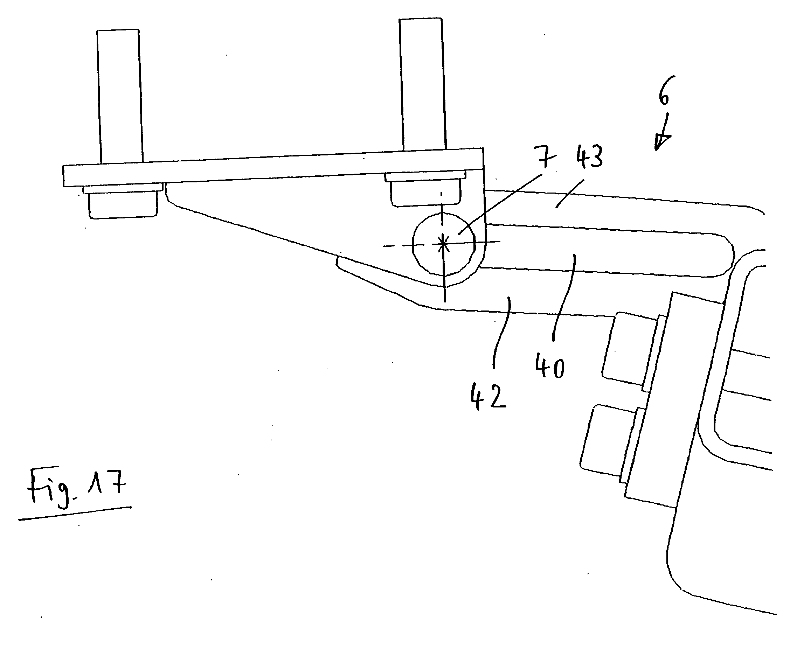

Anschließend wird der Scharnierbügel 5 weiter verschwenkt, wodurch das vordere Ende der Schiebetüre 1 von der Karosserie 2 weggeschwenkt wird. Danach wird die Führungsschiene 3 angetrieben, so daß die Schiebetüre 1 nach hinten geschoben wird. Während dieser Bewegungen wird die Schiebetüre 1 durch den in der Umlenkführung 29 gleitenden Führungsstift 28 geführt. Die Umlenkführung 29 ist derart ausgestaltet, daß die Schiebetüre 1 im wesentlichen parallel zur Karosserie 2 nach hinten bewegt wird. Hierzu kann die Umlenkführung 29 einen im wesentlichen geradlinigen Verlauf aufweisen, wie insbesondere aus den Fig. 14 und 15 ersichtlich. Sie kann allerdings auch gekrümmt sein oder gekrümmte Abschnitte aufweisen.

Wenn der Führungsstift 28 am vorderen Ende der Umlenkführung 29 angelangt ist, wie in Fig. 15 gezeigt, ist die Schiebetüre 1 vollständig geöffnet.

Beim Schließen der Schiebetüre 1 wird der umgekehrte Weg durchlaufen. Der Führungsstift 28 bewegt sich in der Umlenkführung 29 aus der in Fig. 15 gezeigten Stellung über die in Fig. 14 gezeigte Zwischenstellung bis annähernd zum hinteren Ende der Umlenkführung 29, wie in Fig. 13 gezeigt. Anschließend wird die Führungsschiene 3 um ein kurzes Stück verfahren, bis der Verriegelungsbolzen 38 den dem Schließabschnitt 35 gegenüberliegenden Abschnitt 39 der Schloßklinke 34 freigibt, wie in Fig. 12 gezeigt. Danach wird der Scharnierbügel 5 verschwenkt. Hierdurch wird die Schloßführung 30 geöffnet. Dies erfolgt durch einen Druck des Führungsstifts 28 auf den Schließabschnitt 35, so daß die Schloßklinke 34 um die Schwenkachse 33 im Uhrzeigersinn entgegen der Kraft der Rückholfeder 37 verschwenkt wird. Dadurch wird die Abzweigstelle 32 geöffnet, und der Führungsstift 28 gelangt in die Schloßführung 30.

Anschließend gelangt der Führungsstift 28 in Anlage an die der Schwenkachse 33 abgewandte Flanke der Sperrnase 36, so daß die Schloßklinke 34 weiter aufgedrückt wird, bis der Führungsstift 28 an der Sperrnase 36 vorbeigegangen ist. In dieser Stellung wird die Schloßklinke 34 durch die Rückholfeder 37 wieder zugezogen, also um die Schwenkachse 33 entgegen dem Uhrzeigersinn verschwenkt, so daß die verriegelte Stellung gemäß Fig. 9 erreicht wird, in der die Schiebetüre 1 geschlossen und verriegelt ist.

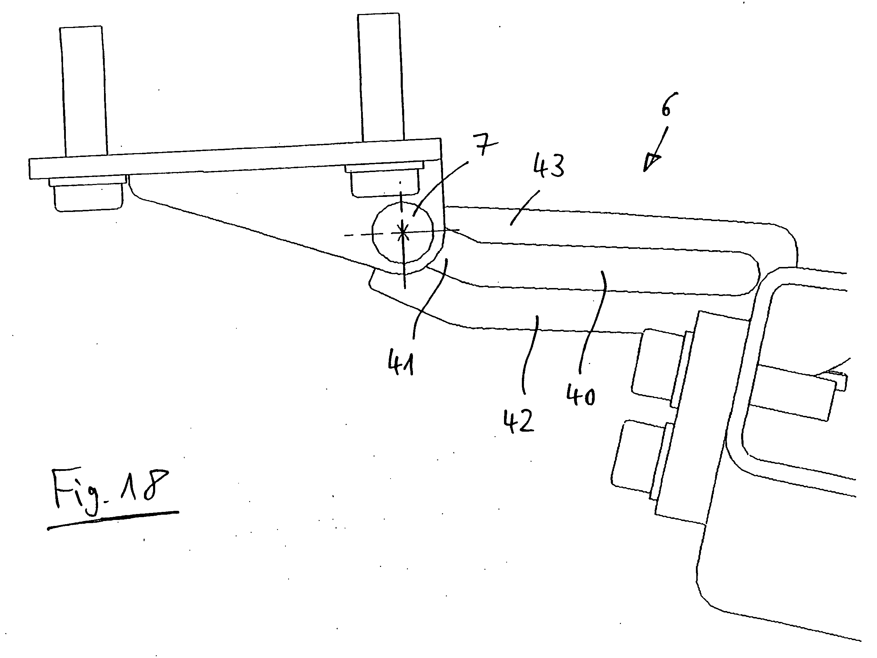

Fig. 16 bis 19 zeigen den an der Karosserie 2 vorgesehenen Scharnierbolzen 7 und die an der Schiebetüre 1 vorgesehene Scharnierkulisse 6 in einer vergrößerten Darstellung, jeweils von oben. Die Scharnierkulisse 6 ist U-förmig ausgestaltet. Sie weist einen längeren, im wesentlichen geraden Abschnitt 40 auf und einen davon zur Karosserie 2 hin abgewinkelten, kürzeren Öffnungsabschnitt 41. Der äußere Schenkel 42 der Scharnierkulisse 6 ist länger als der innere Schenkel 43. An der Innenseite des äußeren Schenkels 42 befindet sich im Bereich des Öffnungsabschnitts 41 ein Mikroschalter 44.

Wenn sich die Schiebetüre 1 in der geschlossenen Stellung befindet, liegt der Scharnierbolzen 7 im Bereich des inneren Endes des geraden Abschnitts 40 der Scharnierkulisse 6, wie in Fig. 16 gezeigt.

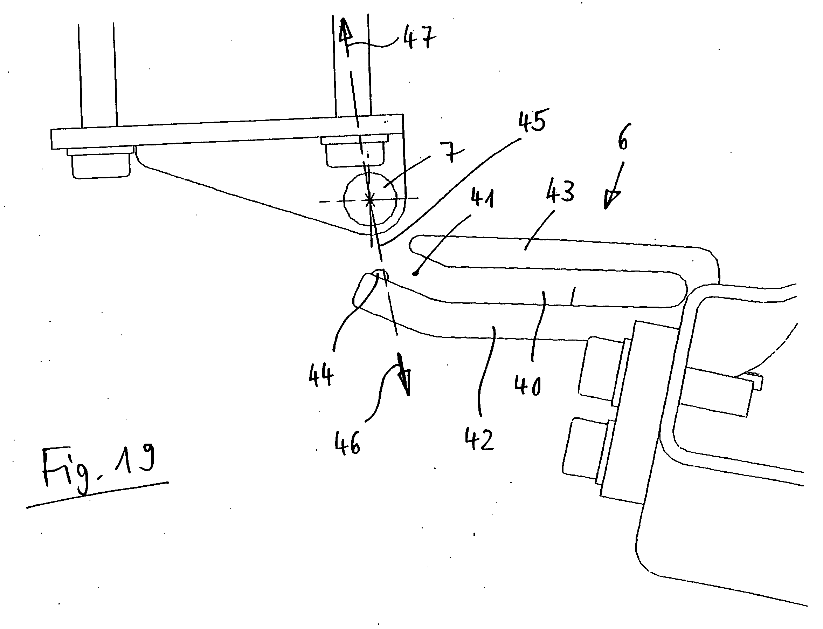

Während der Anstellbewegung der Schiebetüre 1, die durch eine Verschwenkung des Scharnierbügels 5 erzeugt wird, wandert der Scharnierbolzen 7 innerhalb des geraden Abschnitts 40 der Scharnierkulisse 6 nach außen, bis er das äußere Ende des geraden Abschnitts 40 erreicht hat, also den Übergang zum Öffnungsabschnitt 41, wie in Fig. 17 gezeigt. Danach durchläuft der Scharnierbolzen 7 den Öffnungsabschnitt 41 in Richtung nach außen, bis die in Fig. 18 gezeigte Stellung erreicht ist, in der der Scharnierbolzen 7 den Mikroschalter 44 betätigt. Diese Bewegung längs des Öffnungsabschnitts 41 wird dadurch erzeugt, daß die Führungsschiene 3 in Abhängigkeit von der Verschwenkung des Scharnierbügels 5 angetrieben und bewegt wird.

Beim Schließen der Schiebetüre 1 wird der umgekehrte Weg durchlaufen. Die Scharnierkulisse 6 bewegt sich auf der Kreisbahn 45 um die Achse 8 in Richtung des Pfeils 47 auf den Scharnierbolzen 7 zu, wie in Fig. 19 gezeigt, bis der Scharnierbolzen 7 den Mikroschalter 44 betätigt, wie in Fig. 18 gezeigt. Hierdurch wird die Schwenkbewegung des Scharnierbügels 5 beendet und die Längsbewegung der Führungsschiene 3 begonnen. Der Scharnierbolzen 7 durchläuft den Öffnungsabschnitt 41 der Scharnierkulisse 6 nach innen, bis die in Fig. 17 gezeigte Stellung erreicht ist. In dieser Stellung wird die Längsbewegung der Führungsschiene 3 beendet. Der Scharnierbügel 5 wird verschwenkt, so daß der Scharnierbolzen 7 den geraden Abschnitt 40 der Scharnierkulisse 6 nach innen durchläuft, bis die in Fig. 16 gezeigte Stellung erreicht ist, in der die Schiebetüre 1 geschlossen ist.

## Patentansprüche

1. Schiebetüre für ein Fahrzeug, die an ihrer Innenseite eine Führungsschiene (3) aufweist, die in einem Gleitschlitten (4) längsverschieblich gelagert ist,
**dadurch gekennzeichnet,**
**daß** die Schiebetüre (1) an dem einem Scharnierbügel (5) abgewandten Ende an dem Fahrzeug in der Weise arretierbar ist, daß an der Arretierungsstelle (7) bei einer Verschwenkung des Scharnierbügels (5) ein Längenausgleich und eine Drehbarkeit ermöglicht werden.

2. Schiebetüre nach Anspruch 1, **gekennzeichnet durch** einen Motor (16) zum Antrieb der Führungsschiene (3).

3. Schiebetüre nach Anspruch 2, **dadurch gekennzeichnet, daß** durch den Motor (16) ein Zahnrad (18) antreibbar ist.

4. Schiebetüre nach Anspruch 3, **dadurch gekennzeichnet, daß** das Zahnrad (18) in eine an der Schiebetüre (1) vorgesehene Zahnstange (19) eingreift.

5. Schiebetüre nach Anspruch 3 oder 4, **dadurch gekennzeichnet, daß** das Zahnrad (18) in ein weiteres Zahnrad (20) eingreift, das in eine weitere Zahnstange (21) eingreift.

6. Schiebetüre nach einem der vorhergehenden Ansprüche, **dadurch gekennzeichnet, daß** der Gleitschlitten (4) schwenkbar (8, 9) gelagert ist.

7. Schiebetüre nach einem der vorhergehenden Ansprüche, **dadurch gekennzeichnet, daß** der Gleitschlitten (4) an einem Scharnierbügel (5) gelagert ist.

8. Schiebetüre nach Anspruch 7, **dadurch gekennzeichnet, daß** der Scharnierbügel (5) an dem Fahrzeug schwenkbar (8) gelagert ist.

9. Schiebetüre nach Anspruch 7 oder 8, **gekennzeichnet durch** einen Motor (10) zum Antrieb des Scharnierbügels (5).

10. Schiebetüre nach Anspruch 9, **dadurch gekennzeichnet, daß** durch den Motor (10) ein Zahnrad (13) antreibbar ist.

11. Schiebetüre nach Anspruch 10, **dadurch gekennzeichnet, daß** das Zahnrad in ein an dem Schwenkarm (5) vorgesehenes Zahnrad (14) eingreift.

12. Schiebetüre nach einem der vorhergehenden Ansprüche, **dadurch gekennzeichnet, daß** an dem Fahrzeug ein Scharnierbolzen (7) für eine Scharnierkulisse (6) an der Schiebetüre (1) vorgesehen ist.

13. Schiebetüre nach Anspruch 12, **dadurch gekennzeichnet, daß** an der Scharnierkulisse (6) ein Schalter (44) vorgesehen ist.

14. Schiebetüre nach einem der vorhergehenden Ansprüche, **dadurch gekennzeichnet, daß** an dem Scharnierbügel (5) ein Umlenkarm (27) mit einem Führungsstift (28) vorgesehen ist, der in einer an der Schiebetüre (1) vorgesehenen Umlenkführung (29) geführt ist.

15. Schiebetüre nach Anspruch 14, **dadurch gekennzeichnet, daß** von der Umlenkführung (29) eine Schloßführung (30) abzweigt.

16. Schiebetüre nach Anspruch 15, **dadurch gekennzeichnet, daß** die Abzweigstelle (32) der Schloßführung (30) von der Umlenkführung (29) durch eine Schloßklinke (34) schließbar ist.

17. Schiebetüre nach Anspruch 16, **dadurch gekennzeichnet, daß** die Schloßklinke (34) schwenkbar gelagert ist.

18. Schiebetüre nach Anspruch 16 oder 17, **dadurch gekennzeichnet, daß** die Schloßklinke (34) ein Bestandteil der Schloßführung (30) ist.

19. Schiebetüre nach einem der Ansprüche 15 bis 18, **dadurch gekennzeichnet, daß** in der Schloßführung (30) eine Sperrnase (36) für den Führungsstift (28) vorgesehen ist.

20. Schiebetüre nach einem der Ansprüche 16 bis 19, **dadurch gekennzeichnet, daß** die Schloßklinke (34) federbelastet (37) ist.

21. Schiebetüre nach einem der Ansprüche 16 bis 20, **dadurch gekennzeichnet, daß** die Schloßklinke (34) verriegelbar (38) ist.

22. Fahrzeug, insbesondere Kraftfahrzeug, **gekennzeichnet durch** eine Schiebetüre (1) nach einem der Ansprüche 1 bis 21.

## Claims

1. Sliding door for a vehicle, the inside of which sliding door has a guide rail (3) which is mounted in a longitudinally displaceable manner in a sliding carriage (4), **characterized in that** the sliding door (1) can be locked to the vehicle at the end facing away from a hinge bracket (5) in such a manner that, at the locking position (7), length compensation and rotatability are made possible when the hinge bracket (5) is pivoted.

2. Sliding door according to Claim 1, **characterized by** a motor (16) for driving the guide rail (3).

3. Sliding door according to Claim 2, **characterized in that** a pinion (18) can be driven by the motor (16).

4. Sliding door according to Claim 3, **characterized in that** the pinion (18) engages in a rack (19) provided on the sliding door (1).

5. Sliding door according to Claim 3 or 4, **characterized in that** the pinion (18) engages in a further pinion (20) which engages in a further rack (21).

6. Sliding door according to one of the preceding claims, **characterized in that** the sliding carriage (4) is mounted pivotably (8, 9).

7. Sliding door according to one of the preceding claims, **characterized in that** the sliding carriage (4) is mounted on a hinge bracket (5).

8. Sliding door according to Claim 7, **characterized in that** the hinge bracket (5) is mounted pivotably (8) on the vehicle.

9. Sliding door according to Claim 7 or 8, **characterized by** a motor (10) for driving the hinge bracket (5).

10. Sliding door according to Claim 9, **characterized in that** a pinion (13) can be driven by the motor (10).

11. Sliding door according to Claim 10, **characterized in that** the pinion engages in a pinion (14) provided on the pivoting arm (5).

12. Sliding door according to one of the preceding claims, **characterized in that** a hinge bolt (7) for a slotted hinge guide (6) on the sliding door (1) is provided on the vehicle.

13. Sliding door according to Claim 12, **characterized in that** a switch (44) is provided on the slotted hinge guide (6).

14. Sliding door according to one of the preceding claims, **characterized in that** a deflecting arm (27) with a guide pin (28) is provided on the hinge bracket (5) and is guided in a deflecting guide (29) provided on the sliding door (1).

15. Sliding door according to Claim 14, **characterized in that** a lock guide (30) branches off from the deflecting guide (29).

16. Sliding door according to Claim 15, **characterized in that** the branching-off point (32) of the lock guide (30) from the deflecting guide (29) can be closed by a lock latch (34).

17. Sliding door according to Claim 16, **characterized in that** the lock latch (34) is mounted pivotably.

18. Sliding door according to Claim 16 or 17, **characterized in that** the lock latch (34) is part of the lock guide (30).

19. Sliding door according to one of Claims 15 to 18, **characterized in that** a blocking lug (36) for the guide pin (28) is provided in the lock guide (30).

20. Sliding door according to one of Claims 16 to 19, **characterized in that** the lock latch (34) is spring-loaded (37).

21. Sliding door according to one of Claims 16 to 20, **characterized in that** the lock latch (34) can be locked (38).

22. Vehicle, in particular motor vehicle, **characterized by** a sliding door (1) according to one of Claims 1 to 21.

## Revendications

1. Porte coulissante pour un véhicule, laquelle comporte sur sa face intérieure un rail de guidage (3), qui est monté mobile dans le sens longitudinal dans un chariot à glissières (4),
**caractérisée en ce que**
la porte coulissante (1), au niveau de l'extrémité opposée à un bras articulé (5), peut être immobilisée contre le véhicule, à savoir de telle sorte que, en cas de pivotement du bras articulé (5), il est possible de réaliser dans la zone d'immobilisation (7) une compensation de longueur et une possibilité de rotation.

2. Porte coulissante selon la revendication 1, **caractérisée par** un moteur (16) destiné à entraîner le rail de guidage (3).

3. Porte coulissante selon la revendication 2, **caractérisée en ce qu'**une roue dentée (18) peut être actionnée par le moteur (16).

4. Porte coulissante selon la revendication 3, **caractérisée en ce que** la roue dentée (18) engrène dans une crémaillère (19) prévue sur la porte coulissante (1).

5. Porte coulissante selon la revendication 3 ou 4, **caractérisée en ce que** la roue dentée (18) engrène dans une roue dentée (20) supplémentaire, qui engrène dans une crémaillère (21) supplémentaire.

6. Porte coulissante selon l'une quelconque des revendications précédentes, **caractérisée en ce que** le chariot à glissières (4) est monté de manière à pouvoir pivoter (8, 9).

7. Porte coulissante selon l'une quelconque des revendications précédentes, **caractérisée en ce que** le chariot à glissières (4) est monté sur un bras articulé (5).

8. Porte coulissante selon la revendication 7, **caractérisée en ce que** le bras articulé (5) est monté de manière à pouvoir pivoter (8) contre le véhicule.

9. Porte coulissante selon la revendication 7 ou 8, **caractérisée par** un moteur (10) destiné à entraîner le bras articulé (5).

10. Porte coulissante selon la revendication 9, **caractérisée en ce qu'**une roue dentée (13) peut être actionnée par le moteur (10).

11. Porte coulissante selon la revendication 10, **caractérisée en ce que** la roue dentée (13) engrène dans une roue dentée (14) prévue sur le bras articulé (5).

12. Porte coulissante selon l'une quelconque des revendications précédentes, **caractérisée en ce que** sur le véhicule est prévue une broche (7) pour une coulisse (6) sur la porte coulissante (1).

13. Porte coulissante selon la revendication 12, **caractérisée en ce que** sur la coulisse (6) est prévu un interrupteur.

14. Porte coulissante selon l'une quelconque des revendications précédentes, **caractérisée en ce que** sur le bras articulé (5) est prévu un bras de renvoi (27) avec un téton de guidage (28), qui est guidé dans une glissière de renvoi (29) prévue sur la porte coulissante (1).

15. Porte coulissante selon la revendication 14, **caractérisée en ce qu'**une glissière de verrouillage (30) s'embranche sur la glissière de renvoi (29).

16. Porte coulissante selon la revendication 15, **caractérisée en ce que** la zone d'embranchement (32) de la glissière de verrouillage (30) peut être fermée par rapport à la glissière de renvoi (29) par un cliquet de fermeture (34).

17. Porte coulissante selon la revendication 16, **caractérisée en ce que** le cliquet de fermeture (34) est monté de manière à pouvoir pivoter.

18. Porte coulissante selon la revendication 16 ou 17, **caractérisée en ce que** le cliquet de fermeture (34) est une partie intégrante de la glissière de verrouillage (30).

19. Porte coulissante selon l'une quelconque des revendications 15 à 18, **caractérisée en ce que** dans la glissière de verrouillage (30) est prévu un ergot de verrouillage (36) pour le téton de guidage (28).

20. Porte coulissante selon l'une quelconque des revendications 16 à 19, **caractérisée en ce que** le cliquet de fermeture (34) est précontraint par un ressort (37).

21. Porte coulissante selon l'une quelconque des revendications 16 à 20, **caractérisée en ce que** le cliquet de fermeture (34) peut être verrouillé (38).

22. Véhicule, en particulier véhicule automobile, **caractérisé par** une porte coulissante (1) selon l'une quelconque des revendications 1 à 21.
